# FASCICULE DE BREVET EUROPEEN

(11) **EP 2 879 830 B1**
(45) Date de publication et mention de la délivrance du brevet: **27.07.2016**
(21) Numéro de dépôt: 13756644.4
(22) Date de dépôt: 01.08.2013
(51) Int. Cl.: B23K 1/00, B23K 1/008, B23K 3/08, F02K 1/82

(54) **PROCÉDÉ DE FABRICATION D'UNE PIÈCE MÉTALLIQUE**
VERFAHREN ZUR HERSTELLUNG EINES METALLISCHEN WERKSTÜCKES
METHOD OF MANUFACTURING A METAL PIECE

(30) Priorité: 02.08.2012 FR 1257530
(43) Date de publication de la demande: 10.06.2015
(73) Titulaire: Aircelle, 76700 Gonfreville L'Orcher (FR)
(72) Inventeur: BIENVENU, Philippe, F-76700 Rogerville (FR); RIVOAL, Jean-Claude, F-76210 Gruchet-la-Valasse (FR); POULET, Flavien, F-76290 Montivilliers (FR); CANEQUE, Francisco, F-27000 Evreux (FR)
(74) Mandataire: Gaillarde, Frédéric F. Ch.
(86) Numéro de dépôt international: PCT/FR2013/051860
(87) Numéro de publication internationale: WO 2014/020286

(56) Documents cités:
- WO-A1-03/092946
- WO-A1-2010/007263

## Description

La présente invention se rapporte à un procédé de fabrication d'une pièce métallique.

D'une manière connue, le brasage est une technique d'assemblage de deux matériaux qui repose sur les différentiels des coefficients de dilatation thermique de l'outillage et de la matière de la pièce à braser.

En pratique, le brasage est réalisé grâce à un ensemble d'outillage métallique supportant les pièces à assembler. On interpose un métal d'apport possédant une température de fusion inférieure à celle des matériaux à assembler, par exemple de l'étain, du cuivre, de l'argent, de l'aluminium, du nickel ou encore des alliages de métaux précieux, entre les deux composants à assembler, puis on chauffe l'ensemble à une température permettant la fusion du métal d'apport mais pas celle des composants à assembler. Le métal d'apport liquéfié mouille les surfaces des deux composants à assembler. Sous l'effet de cette montée en température, la dilatation de l'outillage assure un plaquage entre elles des pièces à assembler.

L'ensemble est ensuite refroidi de manière à solidifier le métal d'apport entre les deux composants pour en assurer la liaison.

Un tel procédé est décrit par exemple dans la demande internationale WO 2003/092946, qui vise un procédé de soudage diffusion.

A titre indicatif, la masse d'un outillage pour une pièce de 1,2 mètre de diamètre et 0,6 mètre de hauteur est de l'ordre de 1,4 tonne, ce qui nécessite en pratique un temps de cycle, pour chauffer et refroidir l'ensemble, de l'ordre de 13 heures.

Si un tel procédé de brasage est tout à fait applicable et avantageux pour assembler entre elles des pièces en titane de petite taille, il n'en va pas de même lorsque la pièce à fabriquer est de grande taille.

C'est le cas notamment lorsque la pièce à fabriquer est une structure interne fixe de nacelle pour turboréacteur.

Un aéronef est mû par plusieurs turboréacteurs logés chacun dans une nacelle. La nacelle présente généralement une structure tubulaire comprenant une entrée d'air en amont du turboréacteur, une section médiane destinée à entourer une soufflante du turboréacteur, une section aval abritant les moyens d'inversion de poussée et destinés à entourer la chambre de combustion de turboréacteur et, généralement terminée par une tuyère d'éjection située en aval du turboréacteur.

La section aval d'une nacelle comprend généralement une structure externe, dite Outer Fixed Structure (OFS), qui définit, avec une structure interne fixe concentrique, dite Inner Fixed Structure (IFS), entourant la structure du moteur proprement dite en aval de la soufflante, un canal annulaire d'écoulement, canal également appelé veine et destiné à canaliser le flux d'air froid qui circule à l'extérieur du moteur.

Une structure interne fixe d'inverseur de poussée peut présenter un diamètre de 2,4 mètres et une hauteur de 2,7 mètres. L'outillage métallique mis en oeuvre pour fabriquer une telle pièce par le procédé de brasage tel que précédemment défini présente une masse de 4,6 tonnes, ce qui génère une inertie thermique très importante rendant le brasage difficile. De plus, le temps de cycle pour chauffer puis pour refroidir l'ensemble avec un tel outillage métallique est très long, de l'ordre de 20 heures.

Par ailleurs, indépendamment de la taille de la pièce à fabriquer, un tel procédé n'est pas adapté pour la fabrication d'une pièce dont les pièces à assembler présentent un coefficient de dilatation thermique très élevé, comme par exemple l'Inconel 625, matériau pouvant typiquement être utilisé pour fabriquer la partie avant du cône d'éjection des gaz chauds du turboréacteur.

Comme cela est connu en soi, il convient en général de prévoir un cône d'éjection à l'arrière d'un turboréacteur d'aéronef, afin d'une part d'optimiser l'écoulement des gaz chauds expulsés par le turboréacteur, et d'autre part d'absorber au moins une partie du bruit engendré par l'interaction de ces gaz chauds avec l'air ambiant et avec le flux d'air froid expulsé par la soufflante du turboréacteur.

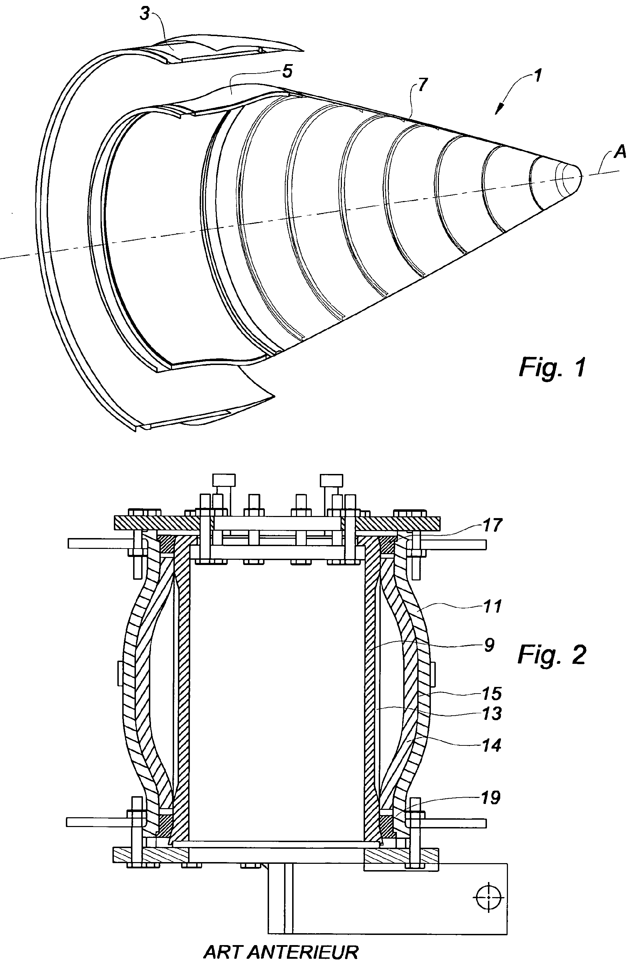

Un tel cône d'éjection classique 1 est représenté à la figure 1, sur laquelle l'amont et l'aval (par rapport au sens d'écoulement des gaz d'échappement du turboréacteur) sont situés respectivement à gauche et à droite de la figure). Ce cône est destiné à être positionné en aval de la turbine du turboréacteur, de manière concentrique à une virole, ou buse 3, elle-même fixée sur le bord aval de la chambre de combustion du turboréacteur. Plus précisément, le cône d'éjection 1 comprend, à proprement parler, une partie avant de cône 5 (souvent désignée par les termes anglosaxons « front plug »), de forme sensiblement cylindrique, et une partie arrière de cône 7 (souvent désignée par les termes anglo-saxons « rear plug »), de forme conique.

Ces deux parties du cône d'éjection peuvent typiquement être formées par des tôles en alliage métallique de type Inconel 625 ou titane B21s.

La partie avant 5 peut être notamment acoustique ou monolithique raidie. Dans le cas où la partie avant 5 est monolithique raidie, cela signifie que la structure est constituée d'une unique tôle renforcée par des raidisseurs. Dans le cas où la partie avant 5 est acoustique, elle comprend au moins une structure d'atténuation acoustique périphérique de type sandwich comprenant au moins un résonateur, notamment de type nid d'abeille, recouvert d'une peau externe perforée et d'une peau interne pleine. La peau externe constitue par ailleurs une surface externe (tôle) de la partie avant de cône 5.

Les métaux d'apport aptes à être utilisés pour braser des pièces en Inconel présentent un coût relativement élevé.

Pour pallier cet inconvénient, il est connu de l'art antérieur un outillage de brasage par mise en pression gazeuse, outillage présenté sur la figure 2, permettant notamment le brasage de l'Inconel 625.

Selon cet art antérieur, l'outillage comprend un fût central 9 cylindrique comprenant en sa périphérie un orifice de sortie (non représenté), et une contre forme 11 présentant une forme sensiblement similaire à la pièce à fabriquer. Typiquement, la contre forme est en deux parties afin de pouvoir être par la suite retirée lorsque la pièce à fabriquer présente une forme ne pouvant être démoulée.

On place entre le fût central 9 et la contre forme 11 une peau interne 13, de forme cylindrique, une structure en nid d'abeille 14, puis une peau externe 15.

Des feuilles de brasure ont été interposées préalablement entre chaque élément constituant l'ensemble peau interne/ structure en nid d'abeille/ peau externe.

La peau externe 15 est perforée et préformée (opération réalisée en premier), c'est-à-dire de forme correspondant sensiblement à la forme finale que l'on souhaite donner à la pièce, forme par exemple bombée telle que représentée sur la figure 1.

L'outillage comprend en outre en ses extrémités supérieure et inférieure des brides d'étanchéité 17 et 19, destinées à réaliser l'étanchéité de l'outillage. Ces brides sont fixées au fût central 9 par vissage.

Le procédé de brasage par mise en pression gazeuse consiste à placer l'ensemble d'outillage dans un four sous vide, puis à introduire un gaz, par exemple de l'argon, à l'intérieur du fût central 9, se diffusant à travers un orifice de sortie du fût central à l'intérieur de la peau interne 13.

Une augmentation de la température du four entraîne la dilatation du gaz, et par conséquent la déformation de la peau interne 13 et de la structure en nid d'abeille, se déformant jusqu'à rencontrer la peau externe 15 préformée, puis jusqu'à rencontrer la contre forme 11.

En augmentant encore la température, les feuilles de brasure fondent et maintiennent entre eux les éléments constituant la pièce métallique ainsi fabriquée lors du refroidissement.

L'ensemble d'outillage peut ensuite être démonté par dévissage des brides supérieure et inférieure d'étanchéité, et en dégageant les parties constituant la contre forme.

Un inconvénient majeur de ce type d'outillage est que le système d'étanchéité est peu fiable. Les vis qui permettent l'enserrement des brides sur le fût central 9 se dilatent sous l'effet de la pression, ce qui entraîne une diminution de la pression sur le système d'étanchéité entrainant des fuites dans le four sous vide.

De plus, le montage et le démontage du système d'étanchéité sont relativement complexes, et le temps de mise en étanchéité de l'outillage est très long, pouvant aller jusqu'à plusieurs heures.

On a tenté de résoudre ces problèmes en recouvrant les vis des brides par une cloche réalisée en inox, que l'on positionne par-dessus l'outillage de façon à permettre une protection thermique desdites vis.

Toutefois, malgré l'utilisation de telles cloches de protection, les vis des brides d'étanchéité se dilatent encore fortement, et ce système d'étanchéité n'est pas satisfaisant.

La présente invention vise à résoudre les inconvénients précités, et se rapporte à cet effet à un procédé de fabrication d'une pièce métallique, remarquable en ce qu'il comprend les étapes suivantes visant à :
- fabriquer un ensemble d'outillage comprenant :
   o au moins une contre forme de forme sensiblement similaire à celle de ladite pièce à fabriquer, et
   o au moins un noyau étanche déformable au moins partiellement et comprenant :
      ▪ au moins une peau interne et au moins une peau externe, lesdites peaux interne et externe constituant respectivement une peau interne et une peau externe de la pièce à fabriquer,
      ▪ au moins une structure en nid d'abeille positionnée entre lesdites peaux interne et externe,
      ▪ au moins un élément de brasage, intercalé entre la structure en nid d'abeille et lesdites peaux interne et externe,
   ledit noyau étant fermé en ses extrémités par au moins un couvercle étanche comprenant des moyens pour l'introduction d'un gaz à l'intérieur dudit noyau, au moins un desdits couvercles étant fixé à ladite peau interne par soudage ;
- positionner ledit ensemble d'outillage dans un four sous vide ;
- introduire un gaz sous pression directement à l'intérieur de la peau interne du noyau de l'ensemble d'outillage ;
- chauffer l'ensemble d'outillage de façon à provoquer successivement :
   o le plaquage du noyau contre la contre forme par dilatation dudit gaz sous pression ;
   o le brasage de la structure en nid d'abeille et des peaux interne et externe ;
- purger ledit gaz de la partie interne de la peau interne ;
- démonter l'ensemble d'outillage de façon à extraire la pièce fabriquée.

Ainsi, en soudant un couvercle aux extrémités de la peau interne de l'ensemble d'outillage, ledit ensemble est parfaitement étanche lors de l'introduction d'un gaz à l'intérieur dudit noyau. De plus, grâce à la fixation du couvercle par soudage sur la peau interne du noyau de l'ensemble d'outillage, le procédé d'assemblage dudit ensemble se trouve facilité par rapport au procédé d'assemblage des ensembles d'outillage connus de l'art antérieur. Ainsi, le temps d'assemblage et le temps de mise en étanchéité de l'ensemble se trouvent considérablement réduits.

En outre, en équipant le noyau par au moins une peau interne constituant une peau interne de la pièce à fabriquer, l'introduction du gaz est directement réalisée à l'intérieur de la peau interne, et la présence d'un fût renfermant le gaz à diffuser n'est pas nécessaire.

En conséquence, la masse de l'outillage est considérablement réduite par rapport à celle obtenue dans l'art antérieur pour mettre en oeuvre un procédé de brasage par dilatation différentielle, ce qui permet de manière avantageuse de réduire l'inertie thermique.

Par ailleurs, la contre forme utilisée dans le procédé selon l'invention n'est pas nécessairement métallique, contrairement aux contre formes utilisées dans l'art antérieur pour mettre en oeuvre des procédés de brasage par dilatation différentielle, ce qui permet de limiter l'inertie thermique engendrée par l'ensemble d'outillage.

Ainsi, en réduisant de la sorte l'inertie thermique, le cycle thermique est *in fine* également réduit, et par conséquent la durée de fabrication d'une pièce métallique de grande taille telle qu'une structure interne fixe de nacelle est optimisée par rapport aux procédés connus de l'art antérieur.

Le procédé selon l'invention peut être utilisé pour fabriquer une partie avant de cône d'éjection des gaz chauds expulsés par un turboréacteur d'aéronef, dont les peaux interne et externe sont de préférence réalisées en Inconel 625.

Selon une caractéristique optionnelle du procédé de fabrication de la partie avant du cône d'éjection des gaz chauds expulsés par un turboréacteur d'aéronef, la peau interne est formée à froid par hydroformage, ce qui permet avantageusement de limiter les déformations de la structure en nid d'abeille lors de l'introduction du gaz sous pression et de l'élévation de la température.

En variante, la peau interne du cône d'éjection est de forme sensiblement cylindrique.

Selon un premier mode de réalisation, la peau externe est préformée.

Selon un deuxième mode de réalisation, la peau externe est de forme sensiblement cylindrique, ce qui permet de simplifier les pièces constituant le noyau de l'ensemble d'outillage en ce qu'il n'est pas nécessaire de préformer ladite peau externe avant sa mise en place dans l'ensemble d'outillage.

En outre, la peau externe est une peau acoustique, c'est-à-dire qu'elle est percée, par exemple par jet d'eau.

Le procédé de fabrication selon l'invention peut également être utilisé pour fabriquer une structure interne fixe de nacelle pour turboréacteur, dont les peaux interne et externe sont de préférence réalisées en titane.

Pour la fabrication d'une structure interne fixe de nacelle pour turboréacteur, le procédé de fabrication de l'ensemble d'outillage est réalisé par le procédé comprenant les étapes suivantes visant à :
- fabriquer une première virole sensiblement en forme de tonneau définissant au moins partiellement la peau interne de la structure interne fixe ;
- fabriquer une deuxième virole sensiblement en forme de tonneau définissant au moins partiellement la peau externe de la structure interne fixe ;
- fabriquer par formage à chaud des îlots définissant au moins partiellement les peaux interne et externe de la structure interne fixe ;
- percer les viroles et les îlots de ladite peau externe ;
- découper chaque virole dans le sens de la longueur de façon à définir :
   o une demi-virole définissant au moins partiellement une peau externe supérieure ;
   o une demi-virole définissant au moins partiellement une peau externe inférieure ;
   o une demi-virole définissant au moins partiellement une peau interne supérieure ;
   o une demi-virole définissant au moins partiellement une peau interne inférieure ;
- souder les îlots aux extrémités de chaque demi-virole de façon à définir :
   o une peau externe supérieure ;
   o une peau externe inférieure ;
   o une peau interne supérieure ;
   o une peau interne inférieure ;
- assembler, par exemple par soudage entre eux, les îlots de la peau interne supérieure avec les îlots de la peau interne inférieure de façon à définir la peau interne de la structure interne fixe ;
- déposer un élément de brasage sur une paroi externe des peaux internes inférieure et supérieure ;
- positionner la peau externe inférieure dans une contre forme inférieure ;
- déposer un élément de brasage sur une paroi interne de ladite peau externe inférieure ;
- déposer une structure en nid d'abeille préformée sur ledit élément de brasage de la paroi interne de la peau externe inférieure ;
- déposer les peaux interne inférieure et supérieure sur ladite structure en nid d'abeille ;
- déposer une structure en nid d'abeille préformée sur l'élément de brasage déposée préalablement sur la paroi externe de la peau interne supérieure ;
- déposer un élément de brasage sur ladite structure en nid d'abeille ou sur la paroi interne de ladite peau externe supérieure ;
- déposer la peau externe supérieure sur l'élément de brasage de ladite structure en nid d'abeille ;
- positionner une contre forme supérieure sur la peau externe supérieure.

D'autres caractéristiques et avantages de la présente invention apparaîtront à la lecture de la description qui va suivre et à l'examen des figures ci-annexées, dans lesquelles :
- la figure 1 est une vue en coupe axiale et en perspective d'une partie arrière de turboréacteur d'aéronef, comprenant notamment un cône d'éjection ;
- la figure 2 illustre en coupe longitudinale un ensemble d'outillage selon l'art antérieur pour la fabrication de la partie avant du cône d'éjection ;
- la figure 3 est une vue en coupe longitudinale de l'ensemble d'outillage selon l'invention ;
- la figure 4 est une vue en coupe longitudinale du noyau de l'ensemble d'outillage, réalisé selon un premier mode de réalisation ;
- la figure 5 est une vue en coupe longitudinale de la peau interne fermée en ses extrémités inférieure et supérieure par des couvercles ;
- la figure 6 est une vue en coupe longitudinale du noyau de l'ensemble d'outillage, réalisé selon un deuxième mode de réalisation ;
- la figure 7 représente schématiquement une demi-coquille d'une structure interne de nacelle pour turboréacteur ;
- les figures 8 à 16 illustrent les étapes du procédé de fabrication selon l'invention appliqué à la fabrication d'une structure interne fixe de nacelle.

Sur l'ensemble des figures, des références identiques ou analogues désignent des organes ou ensembles d'organes identiques ou analogues.

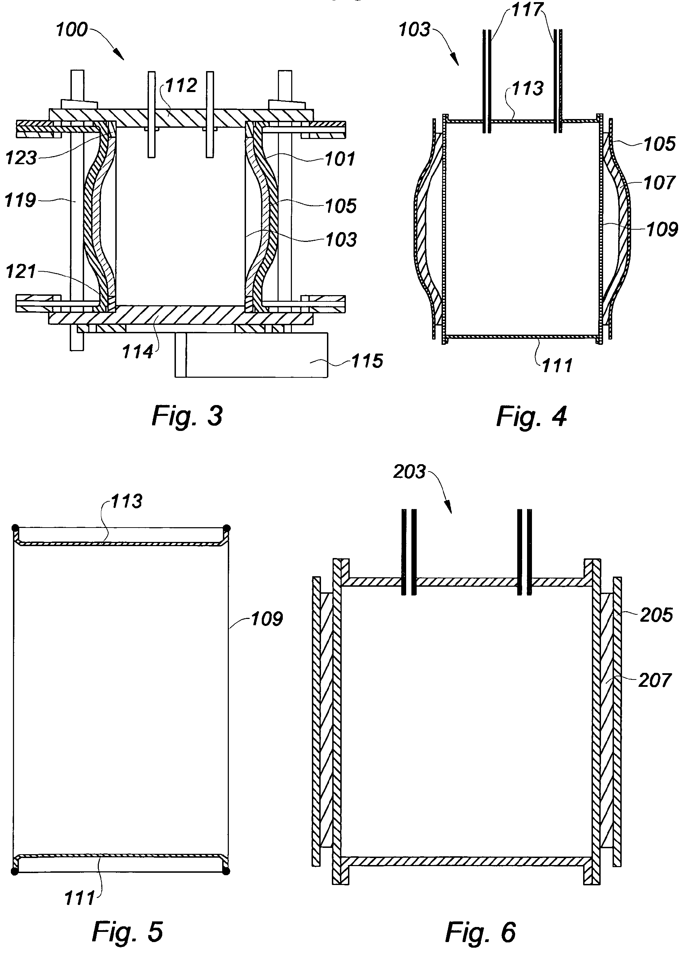

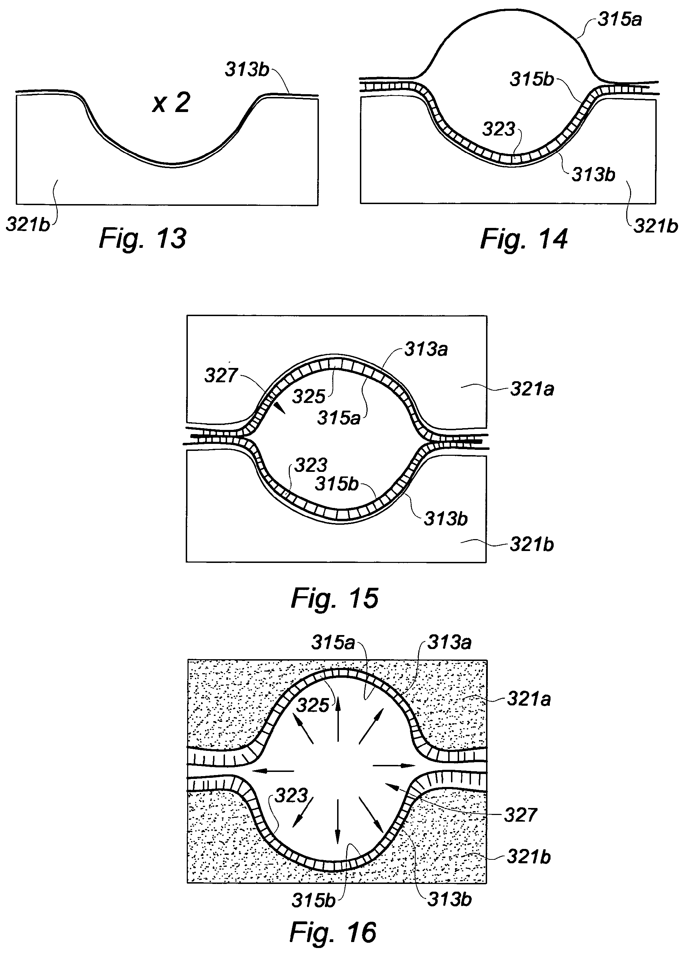

Par ailleurs, dans la présente description, sont utilisés des mots tels que « supérieur » et « inférieur », en référence à la position de l'ensemble d'outillage lorsque celui-ci est en position telle que représentée par exemple sur la figure 3 ou sur la figure 15.

On se réfère à la figure 3, illustrant l'ensemble d'outillage 100 conformé pour mettre en oeuvre le procédé de fabrication du cône d'éjection des gaz chauds du turboréacteur.

L'ensemble d'outillage 100 comprend une contre forme 101, de préférence métallique, présentant une forme sensiblement similaire à celle que l'on souhaite donner à la pièce à fabriquer, et un noyau 103 positionné à l'intérieur de ladite contre forme.

La figure 4 illustre le noyau 103 selon un premier mode de réalisation.

Le noyau 103 comprend une peau externe 105, une structure en nid d'abeille 107 et une peau interne 109 aux extrémités inférieure et supérieure de laquelle sont positionnés des couvercles 111 et 113 obturant le noyau.

Typiquement, de tels couvercles sont des flasques de forme sensiblement similaire à celle de la section de la peau interne 109.

Ces flasques sont par exemple réalisées en matériau étanche identique à celui des peaux interne et externe, c'est à dire en Inconel 625.

Il va de soi que tout autre matériau peut être utilisé pour réaliser l'ensemble d'outillage selon l'invention, dépendant du matériau de la pièce que l'on souhaite fabriquer.

La peau externe 105 présente une forme bombée sensiblement similaire à celle que l'on souhaite donner à la pièce à fabriquer, tandis que la peau interne 109 présente une forme sensiblement cylindrique.

Le procédé d'assemblage du noyau 103 est réalisé de la façon suivante.

La peau externe 105 est préformée préalablement à son intégration dans l'ensemble d'outillage, de façon à lui donner une forme bombée sensiblement similaire à la forme de la partie avant 5 du cône d'éjection 1 que l'on souhaite fabriquer.

La peau externe est préformée par exemple par un procédé de fluotournage et/ ou d'hydroformage, procédé décrit dans la demande de brevet numéro 1200577 appartenant au demandeur et non encore publiée à la date de dépôt de la présente demande. Typiquement, ce procédé consiste à fabriquer une peau cylindrique par un procédé de fluotournage classique, puis à introduire ladite peau cylindrique dans un outillage équipé de moyens d'introduction d'eau sous pression à l'intérieur de ladite peau cylindrique, de façon à entraîner son déplacement contre une contre forme de forme sensiblement similaire à celle de la pièce finale que l'on souhaite réaliser. Le procédé d'hydroformage permet de donner à la pièce initialement cylindrique une forme quelconque complexe.

La peau externe 105 est destinée à venir au contact de la veine de circulation du flux d'air secondaire (ladite veine est classiquement formée par le canal défini entre un carénage du turboréacteur et la structure fixe interne de la nacelle supportant le turboréacteur) lorsque le cône d'éjection est intégré au turboréacteur.

Ainsi, la peau externe 105 est acoustique, c'est-à-dire qu'elle est percée de façon à laisser passer les ondes sonores provenant de la veine de circulation du flux d'air secondaire. Un tel perçage est réalisé par un procédé connu en soi, tel qu'un procédé de perçage par jet d'eau.

La structure en nid d'abeille 107 est fixée à la face interne de la peau externe 105 par exemple par brasage, et épouse la forme de ladite face interne.

Une feuille de brasure (non représentée), par exemple du feuillard ou du « tape », est interposée entre la peau externe 105 et la structure en nid d'abeille 107.

La feuille de brasure est par exemple fixée à la peau externe 105 par soudage à déchargement de condensateur ou par collage.

La structure en nid d'abeille reçoit en sa face interne la peau interne 109. Une feuille de brasure, ou du tape, est également interposée entre la peau interne et la structure en nid d'abeille, ou collée sur la face externe de la peau interne ou sur la surface externe du nida.

De préférence, la peau interne 109 est cylindrique, mais il est bien sûr possible de prévoir toute autre forme si l'homme du métier y trouve un intérêt particulier.

En outre, la peau interne 109 est dite « pleine », c'est-à-dire qu'elle n'est pas perforée.

Le noyau 103, comprenant la peau externe 105, la structure en nid d'abeille 107, la peau interne 109 et les feuilles de brasure, est à présent apte à être fermé en ses extrémités inférieure et supérieure par les couvercles 111 et 113.

Les couvercles 111 et 113 sont préférentiellement soudés sur la peau interne 109 avant la mise en place des feuilles de brasure.

Tout d'abord, l'extrémité inférieure est fermée grâce au couvercle 111.

Comme représenté sur la figure 3, l'ensemble 100 selon l'invention comprend des plateaux de maintien 112, 114. Le plateau 114 repose sur un socle 115, et la contre forme 101 est positionnée en périphérie de la peau externe 105.

Typiquement, la contre forme 101 comprend deux coques distinctes permettant la mise en place et le retrait de la contre forme autour du noyau quel que soit le type de pièce que l'on souhaite fabriquer.

La fermeture de la partie supérieure du noyau 103 est ensuite réalisée par le couvercle 113, comme représenté sur la figure 4.

Le couvercle 113 comprend des moyens d'introduction d'un gaz, typiquement réalisés par deux conduits d'alimentation 117 communiquant entre l'intérieur et l'extérieur du noyau 103.

Selon l'invention, les couvercles 111 et 113 sont fixés à la peau interne 109 par soudage, comme illustré sur la figure 5.

Bien sûr, le montage et le soudage des couvercles 111 et 113 peuvent indifféremment être réalisés sur la peau interne avant le montage de la structure en nid d'abeille, des feuilles de brasure et de la peau externe.

Plus précisément, il est tout à fait possible de souder les couvercles 111 et 113 sur la peau interne 109, puis de positionner la structure en nid d'abeille 107 et la peau externe 105.

L'ensemble d'outillage 100 est ensuite enserré au niveau des plateaux de maintien 112 et 114 par exemple au moyen de tiges filetées 119 visibles sur la figure 3.

En outre, deux couronnes 121 et 123 en forme de U sont installées au niveau des extrémités inférieure et supérieure de la peau interne 109, dans une zone de l'ensemble d'outillage où la structure en nid d'abeille n'est pas présente.

Les couronnes 121 et 123 permettent d'éviter l'écrasement de la peau interne sur la peau externe lors de l'introduction du gaz sous pression à l'intérieur de la peau interne.

On se réfère à la figure 6, illustrant un noyau 203 de l'ensemble d'outillage réalisé selon un deuxième mode de réalisation.

L'ensemble d'outillage réalisé selon ce deuxième mode de réalisation diffère de l'ensemble d'outillage du premier mode de réalisation en ce que le noyau 203 comprend une peau externe 205 non pas préformée mais cylindrique. La structure en nid d'abeille 207 est également cylindrique.

Selon ce mode de réalisation, le caractère acoustique de la peau externe 205 est par exemple réalisé par un procédé connu en soi de perçage à plat.

Selon une alternative non représentée s'appliquant aux deux modes de réalisation précités, le noyau comprend un fût interne positionné à l'intérieur du nida et de la peau externe. Un tel fût interne, par exemple cylindrique, est équipé de moyens de diffusion du gaz positionnés par exemple sur la paroi de révolution dudit fût ou couvercle, permettant la communication du gaz depuis l'intérieur du fût vers la face interne de la peau interne.

Le procédé de fabrication d'une pièce telle qu'une partie avant de cône d'éjection des gaz de turboréacteur est à présent décrit.

On assemble l'ensemble d'outillage selon le procédé d'assemblage précédemment décrit en référence au premier ou au deuxième mode de réalisation.

On place l'ensemble d'outillage assemblé dans un four sous vide. On raccorde les conduits d'alimentation à des canalisations communiquant avec un réservoir renfermant de l'argon ou tout gaz neutre.

L'étanchéité de l'ensemble d'outillage est par exemple vérifiée grâce à un test à l'hélium connu en soi.

On introduit ensuite le gaz directement à l'intérieur de la face interne de la peau interne, sous une pression de l'ordre de 0.6 bar. Le four est ensuite porté à une température de l'ordre de 1040°C, correspondant à la température de brasage de l'inconel 625.

L'augmentation de la température entraîne une dilatation du gaz et une augmentation de la pression, jusqu'à environ 6 bar.

Lorsque le four atteint une température de l'ordre de 900°C, la pression exercée sur la face interne de la peau interne entraîne son déplacement vers la contre forme.

Le déplacement de la peau interne entraîne par conséquent un plaquage de la structure en nid d'abeille et de la peau externe contre la paroi interne de la contre forme. Le brasage a lieu pour une température de l'ordre de 1040°C.

Alternativement, le maintien des éléments constituant la pièce à fabriquer est réalisé non pas par brasage mais par soudage diffusion, c'est-à-dire par diffusion atomique entre la structure en nid d'abeille et les peaux interne et externe lors de l'élévation thermique dans le four et de l'introduction du gaz argon à l'intérieur de la peau interne.

Lorsque la fabrication de la pièce est terminée, la partie interne de la peau interne de la pièce fabriquée est purgée, et les couvercles sont retirés de la peau interne par exemple par un procédé de découpage laser connu en soi.

La pièce ainsi fabriquée peut être extraite de l'ensemble d'outillage après retrait de la contre forme.

La présente invention se rapporte également un procédé de fabrication d'une structure interne de nacelle pour turboréacteur.

Une structure interne de nacelle est usuellement formée de deux demi-coquilles de forme sensiblement hémicylindrique formant un carénage du turboréacteur, de part et d'autre d'un plan vertical longitudinal de symétrie de la nacelle.

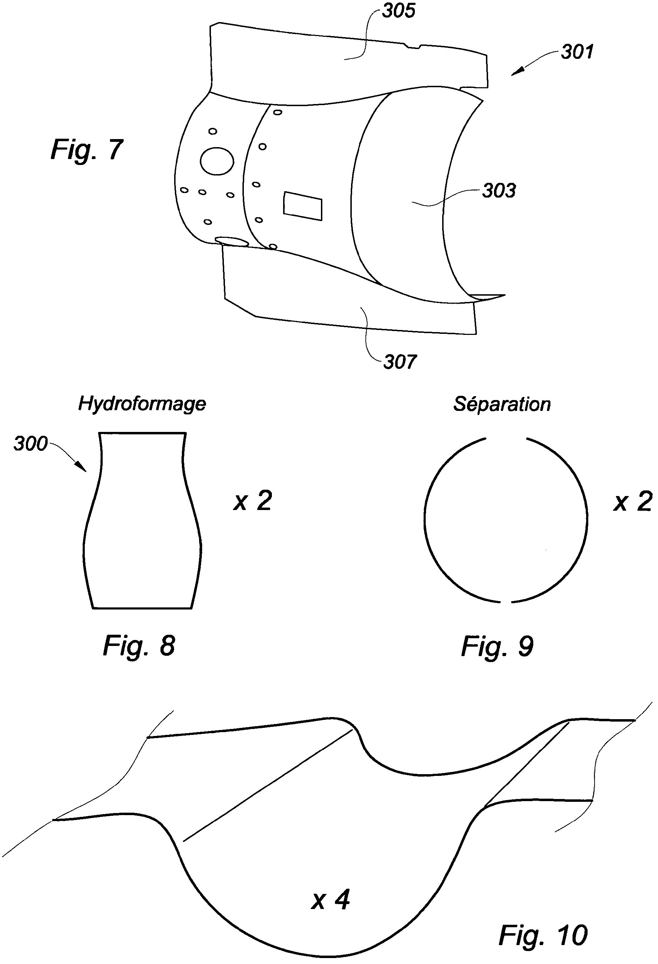

Sur la figure 7 est illustrée une telle demi-coquille 301, comprenant en outre une peau interne et une peau externe, par exemple réalisées en titane.

La demi-coquille présente une portion centrale bombée 303 terminée par deux portions sensiblement planes définissant des îlots 305, 307.

Selon l'invention, le procédé de fabrication d'une telle structure interne comprend une étape visant à fabriquer un noyau étanche déformable au moins en partie, destinée à venir se plaquer sur une contre forme définissant le contour de la pièce à fabriquer lors de la mise en oeuvre du procédé de fabrication.

On se réfère à présent aux figures 8 à 16, illustrant le procédé selon l'invention appliqué à la fabrication d'une structure interne de nacelle pour turboréacteur.

On fabrique par hydroformage une première virole 309 sensiblement en forme de tonneau et destinée à définir la portion bombée de la peau interne de la structure interne fixe.

De la même manière, on réalise une deuxième virole sensiblement en forme de tonneau et destinée à définir la portion bombée de la peau externe de la structure interne fixe.

Les îlots des demi-structures inférieure et supérieure des peaux interne et externe sont fabriqués par un procédé de formage à chaud, connue de l'homme du métier.

Afin de donner les propriétés d'absorption acoustique à la structure interne fixe, on prévoit notamment de percer, par exemple par jet d'eau, les viroles et les îlots de la peau externe.

Les viroles formant la partie bombée des peaux interne et externe sont ensuite découpées, par exemple par découpe laser, comme représenté sur la figure 9, dans le sens de la longueur, de façon à disposer de quatre demi-viroles définissant la partie bombée d'une peau externe supérieure 313a, d'une peau externe inférieure 313b, d'une peau interne supérieure 315a et d'une peau interne inférieure 315b, visibles sur la figure 15.

Lorsque ces quatre éléments sont réalisés, on soude les îlots aux extrémités de chaque demi-virole de façon à définir la peau externe supérieure 313a, la peau externe inférieure 313b, la peau interne supérieure 315a et la peau interne inférieure 315b, comme représenté sur la figure 10.

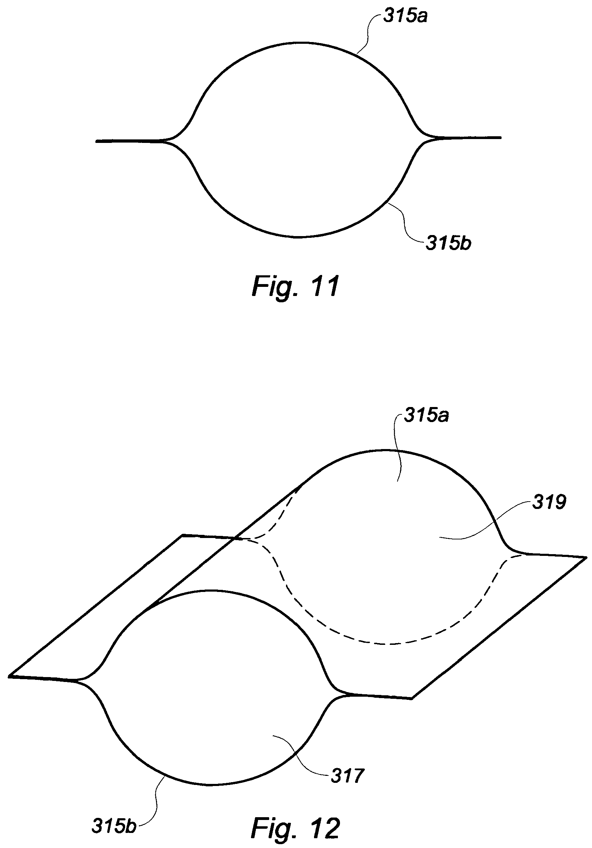

Ensuite, en se référant à la figure 11, les îlots de la peau interne supérieure 315a sont soudés avec les îlots de la peau interne inférieure 315b de façon à définir la peau interne de la structure interne de la nacelle.

Selon l'invention, on soude un couvercle 317 et un couvercle 319 au niveau des extrémités ouvertes des peaux internes 315a et 315b, comme l'illustre la figure 12.

Comme précédemment, les couvercles 317 et 319 sont étanches et comprennent des moyens pour l'introduction d'un gaz à l'intérieur du noyau.

Un élément de brasage est ensuite déposé sur les parois externes des peaux internes inférieure 315b et supérieure 315a.

L'étape suivante du procédé (figure 13) consiste à positionner la peau externe inférieure 313b dans une contre forme inférieure 321 b.

Comme représenté sur la figure 14, on dépose un élément de brasage (non représenté) sur la paroi interne de la peau externe inférieure 313b, puis une structure en nid d'abeille 323 préformée sur ledit élément de brasage. La peau interne, constituée par la peau interne supérieure 315a et par la peau interne inférieure 315b, est ensuite positionnée sur la structure en nid d'abeille 323.

On dépose ensuite (figure 15) une structure en nid d'abeille 325 préformée sur l'élément de brasage (non représenté) déposée préalablement sur la paroi externe de la peau interne supérieure 315a.

Un élément de brasage (non représenté) est ensuite rajouté sur la structure en nid d'abeille 325 avant de déposer la peau externe supérieure 313a sur l'élément de brasage de ladite structure en nid d'abeille. L'élément de brasage peut alternativement être déposé non pas sur la structure en nid d'abeille mais directement sur la paroi interne de la peau externe supérieure.

On place ensuite une contre forme supérieure 321 a au contact de la peau externe supérieure 313a.

Les contre formes inférieure 321 b et supérieure 321 a sont par exemple réalisées en matériau composite carbone-carbone, ce qui permet d'éviter une inertie thermique trop importante liée aux dimensions de la pièce à fabriquer.

Le noyau 327 est alors constitué par les peaux internes 315a, 315b et externes 313a, 313b, séparées par les structures en nid d'abeille 323, 325 et par les éléments de brasage.

L'ensemble d'outillage, constitué par le noyau 327 fermé grâce aux couvercles et par les contre formes 321 a et 321 b, est ensuite placé à la verticale dans un four sous vide, comme illustré schématiquement sur la figure 16.

On introduit alors un gaz, par exemple de l'argon, sous pression directement à l'intérieur de la peau interne du noyau de l'ensemble d'outillage, définie par les peaux interne supérieure 315a et 315b.

En chauffant l'ensemble d'outillage jusqu'à la température de brasage, on provoque successivement :
o le plaquage du noyau 327 contre les contre formes supérieure 321 a et inférieure 321 b, par dilatation du gaz ;
o le brasage des structures en nid d'abeille 323, 325 et des peaux interne 315a, 315b et externe 313a, 313b.

Lorsque l'opération de brasage est terminée, le gaz est ensuite purgé du noyau, et l'ensemble d'outillage est démonté de façon à extraire la pièce fabriquée.

Grâce à l'ensemble d'outillage utilisé pour mettre en oeuvre le procédé selon l'invention, on s'affranchit de la présence d'un fût central renfermant le gaz sous pression à diffuser selon l'art antérieur.

On réduit de la sorte considérablement la masse de l'ensemble d'outillage par rapport aux outillages connus de l'art antérieur.

En conséquence, on réduit l'inertie thermique, ce qui permet de réduire le cycle thermique et la durée de fabrication d'une pièce métallique.

Enfin, comme il va de soi, la présente invention ne se limite pas aux seules formes de réalisation de l'ensemble d'outillage, décrites ci-dessus à titre d'exemples, mais elle embrasse au contraire toutes les variantes.

## Revendications

1. Procédé de fabrication d'une pièce métallique, remarquable en ce qu'il comprend les étapes suivantes visant à :
- fabriquer un ensemble d'outillage comprenant :
o au moins une contre forme (101, 321 a, 321 b) de forme sensiblement similaire à celle de ladite pièce à fabriquer, et
o au moins un noyau étanche (103, 203, 327) déformable au moins partiellement et comprenant :
▪ au moins une peau interne (109, 315a, 315b) et au moins une peau externe (105, 205, 313a, 313b), lesdites peaux interne et externe constituant respectivement une peau interne et une peau externe de la pièce à fabriquer,
▪ au moins une structure en nid d'abeille (107, 207, 323, 325) positionnée entre lesdites peaux interne et externe,
▪ au moins un élément de brasage, intercalé entre la structure en nid d'abeille (107, 207, 323, 325) et lesdites peaux interne (109, 315a, 315b) et externe (105, 205, 313a, 313b),
ledit noyau étant fermé en ses extrémités par au moins un couvercle (111, 113, 317, 319) étanche comprenant des moyens pour l'introduction d'un gaz à l'intérieur dudit noyau, au moins un desdits couvercles étant fixé à ladite peau interne par soudage ;
- positionner ledit ensemble d'outillage dans un four sous vide ;
- introduire un gaz sous pression directement à l'intérieur de la peau interne du noyau de l'ensemble d'outillage ;
- chauffer l'ensemble d'outillage de façon à provoquer successivement :
o le plaquage du noyau contre la contre forme (101, 321a, 321 b) par dilatation dudit gaz sous pression ;
o le brasage de la structure en nid d'abeille (107, 207, 323, 325) et des peaux interne (109, 315a, 315b) et externe (105, 205, 313a,313b);
- purger ledit gaz de la partie interne de la peau interne (109, 315a, 315b) ;
- démonter l'ensemble d'outillage de façon à extraire la pièce fabriquée.

2. Procédé de fabrication selon la revendication 1, **caractérisé en ce que** la pièce à fabriquer est une partie avant de cône d'éjection des gaz chauds expulsés par un turboréacteur d'aéronef dont les peaux interne (109) et externe (105, 205) sont de préférence réalisées en Inconel 625.

3. Procédé de fabrication selon la revendication 2, **caractérisé en ce que** la peau interne est formée à froid par hydroformage.

4. Procédé de fabrication selon la revendication 2, **caractérisé en ce que** la peau interne (109) est de forme sensiblement cylindrique.

5. Procédé de fabrication selon l'une quelconque des revendications 2 à 4, **caractérisé en ce que** la peau externe (105) est préformée.

6. Procédé de fabrication selon l'une des revendications 2 à 4, **caractérisé en ce que** la peau externe (205) est de forme sensiblement cylindrique.

7. Procédé de fabrication selon l'une quelconque des revendications 1 à 6, **caractérisé en ce que** la peau externe (105, 205) est une peau acoustique.

8. Procédé de fabrication selon la revendication 1, **caractérisé en ce que** la pièce à fabriquer est une structure interne fixe de nacelle pour turboréacteur dont les peaux interne (315a, 315b) et externe (313a, 313b) sont de préférence réalisées en titane.

9. Procédé de fabrication selon la revendication 8, **caractérisé en ce que** l'ensemble d'outillage est réalisé par un procédé de fabrication comprenant les étapes suivantes visant à :
- fabriquer une première virole sensiblement en forme de tonneau définissant au moins partiellement la peau interne de la structure interne fixe ;
- fabriquer une deuxième virole sensiblement en forme de tonneau définissant au moins partiellement la peau externe de la structure interne fixe ;
- fabriquer par formage à chaud des îlots définissant au moins partiellement les peaux interne et externe de la structure interne fixe ;
- percer les viroles et les îlots de ladite peau externe ;
- découper chaque virole dans le sens de la longueur de façon à définir :
o une demi-virole définissant au moins partiellement une peau externe supérieure (313a) ;
o une demi-virole définissant au moins partiellement une peau externe inférieure (313b) ;
o une demi-virole définissant au moins partiellement une peau interne supérieure (315a) ;
o une demi-virole définissant au moins partiellement une peau interne inférieure (315b) ;
- souder les îlots aux extrémités de chaque demi-virole de façon à définir :
o une peau externe supérieure (313a) ;
o une peau externe inférieure (313b) ;
o une peau interne supérieure (315a) ;
o une peau interne inférieure (315b) ;
- assembler, par exemple par soudage entre eux, les îlots de la peau interne supérieure (315a) avec les îlots de la peau interne inférieure (315b) de façon à définir la peau interne de la structure interne fixe ;
- déposer un élément de brasage sur une paroi externe des peaux internes inférieure (315b) et supérieure (315a) ;
- positionner la peau externe inférieure (313b) dans une contre forme inférieure (321 b) ;
- déposer un élément de brasage sur une paroi interne de ladite peau externe inférieure (313b);
- déposer une structure en nid d'abeille (323) préformée sur ledit élément de brasage de la paroi interne de la peau externe inférieure (313b) ;
- déposer les peaux interne inférieure (315b) et supérieure (315a) sur ladite structure en nid d'abeille (323) ;
- déposer une structure en nid d'abeille (325) préformée sur l'élément de brasage déposée préalablement sur la paroi externe de la peau interne supérieure (315a) ;
- déposer un élément de brasage sur ladite structure en nid d'abeille (325) d'abeille ou sur la paroi interne de ladite peau externe supérieure ;
- déposer la peau externe supérieure (313a) sur l'élément de brasage de ladite structure en nid d'abeille (325) ;
- positionner une contre forme (321a) supérieure sur la peau externe supérieure (313a).

## Patentansprüche

1. Verfahren zum Herstellen eines metallischen Werkstücks, **dadurch gekennzeichnet, dass** es die folgenden Schritte umfasst, die auf Folgendes abzielen:
- Herstellen einer Werkzeugeinheit, die Folgendes umfasst:
--mindestens eine Gegenform (101, 321 a, 321 b) mit im Wesentlichen ähnlicher Form wie die des herzustellen Werkstücks, und
-- mindestens einen dichten Kern (103, 203, 327), der mindestens teilweise verformbar ist und Folgendes umfasst:
--- mindestens eine Innenverkleidung (109, 315a, 315b) und mindestens eine Außenverkleidung (105, 205, 313a, 313b) wobei die Innenverkleidung und die Außenverkleidung jeweils eine Innenverkleidung und eine Außenverkleidung des herzustellenden Werkstücks bilden,
--- mindestens eine Wabenstruktur (107, 207, 323, 325), die zwischen der Innenverkleidung und der Außenverkleidung positioniert ist,
--- mindestens ein Lötelement, das zwischen die Wabenstruktur (107, 207, 323, 325) und die Innenverkleidung (109, 315a, 315b) und die Außenverkleidung (105, 205, 313a, 313b) eingefügt ist,
wobei der Kern an seinen Enden durch mindestens einen dichten Deckel (111, 113, 317, 319) verschlossen ist, der Mittel umfasst, um ein Gas in das Innere des Kerns einzuführen, wobei mindestens einer der Deckel an der Innenverkleidung durch Schweißen befestigt ist;
- Positionieren der Werkzeugeinheit in einem Ofen unter Vakuum;
- Einführen eines Gases unter Druck direkt in das Innere der Innenverkleidung des Kerns der Werkzeugeinheit;
- Erhitzen der Werkzeugeinheit derart, dass aufeinanderfolgend Folgendes verursacht wird:
-- das Andrücken des Kerns gegen die Gegenform (101, 321 a, 321 b) durch Dehnung des Gases unter Druck;
--das Löten der Wabenstruktur (107, 207, 323, 325) und der Innenverkleidung (109, 315a, 315b) und der Außenverkleidung (105, 205, 313a, 313b);
- das Entleeren des Gases aus dem inneren Teil der Innenverkleidung (109, 315a, 315b);
- das Demontieren der Werkzeugeinheit derart, dass das hergestellte Werkstück herausgenommen wird.

2. Herstellungsverfahren nach Anspruch 1, **dadurch gekennzeichnet, dass** das herzustellende Werkstück ein Vorderteil eines Auswurfkegels der heißen Gase, die von einem Turboreaktor eines Luftfahrzeugs ausgestoßen werden, ist, dessen Innenverkleidung (109) und Außenverkleidung (105, 205) vorzugsweise aus Inconel 625 hergestellt sind.

3. Herstellungsverfahren nach Anspruch 2, **dadurch gekennzeichnet, dass** die Innenverkleidung durch Hydroformen kalt geformt wird.

4. Herstellungsverfahren nach Anspruch 2, **dadurch gekennzeichnet, dass** die Innenverkleidung (109) im Wesentlichen zylindrische Form hat.

5. Herstellungsverfahren nach einem der Ansprüche 2 bis 4, **dadurch gekennzeichnet, dass** die Innenverkleidung (105) vorgeformt ist.

6. Herstellungsverfahren nach einem der Ansprüche 2 bis 4, **dadurch gekennzeichnet, dass** die Außenverkleidung (205) im Wesentlichen zylindrisch ist.

7. Herstellungsverfahren nach einem der Ansprüche 1 bis 6, **dadurch gekennzeichnet, dass** die Außenverkleidung (105, 205) eine akustische Verkleidung ist.

8. Herstellungsverfahren nach Anspruch 1, **dadurch gekennzeichnet, dass** das herzustellende Werkstück eine stationäre Innenstruktur einer Gondel für Turboreaktor ist, dessen Innenverkleidung (315a, 315b) und Außenverkleidung (313a, 313b) vorzugsweise aus Titan hergestellt sind.

9. Herstellungsverfahren nach Anspruch 8, **dadurch gekennzeichnet, dass** die Werkzeugeinheit durch ein Herstellungsverfahren hergestellt wird, das die folgenden Schritte umfasst, die auf Folgendes abzielen:
- Herstellen eines ersten Mantelschusses im Wesentlichen in Tonnenform, der mindestens teilweise die Innenverkleidung der stationären Innenstruktur definiert;
- Herstellen eines zweiten Mantelschusses im Wesentlichen in Tonnenform, der mindestens teilweise die Außenverkleidung der stationären Innenstruktur definiert;
- Herstellen durch Warmformen von Inseln, die mindestens teilweise die Innenverkleidung und Außenverkleidung der stationären Innenstruktur bilden;
- Durchbohren der Mantelschüsse und der Inseln der Außenverkleidung;
- Schneiden jedes Mantelschusses in die Längsrichtung derart, dass Folgendes definiert wird:
-- ein halber Mantelschuss, der mindestens teilweise eine obere Außenverkleidung (313a) definiert;
-- ein halber Mantelschuss, der mindestens teilweise eine untere Außenverkleidung (313b) definiert;
-- einen halben Mantelschuss, der mindestens teilweise eine obere Innenverkleidung (315a) definiert;
-- einen halben Mantelschuss, der mindestens teilweise eine untere Innenverkleidung (315b) definiert;
- Schweißen der Inseln an die Enden jedes halben Mantelschusses derart, dass Folgendes definiert wird:
-- eine obere Außenverkleidung (313a);
-- eine untere Außenverkleidung (313b);
-- eine obere Innenverkleidung (315a);
-- eine untere Innenverkleidung (315b);
- Zusammenfügen, zum Beispiel durch Zusammenschweißen, der Inseln der oberen Innenverkleidung (315a) mit den Inseln der unteren Innenverkleidung (315b) derart, dass die Innenverkleidung der stationären Innenstruktur definiert wird;
- Ablegen eines Lötelements auf einer Außenwand der unteren Innenverkleidung (315b) und der oberen Innenverkleidung (315a);
- Positionieren der unteren Außenverkleidung (313b) in einer unteren Gegenform (321 b);
- Ablegen eines Lötelements auf einer Innenwand der unteren Außenverkleidung (313b);
- Ablegen einer vorgeformten Wabenstruktur (323) auf dem Lötelement der Innenwand der unteren Außenverkleidung (313b);
- Ablegen der unteren Innenverkleidung (315b) und der oberen Innenverkleidung (315a) auf der Wabenstruktur (323);
- Ablegen einer vorgeformten Wabenstruktur (325) auf dem Lötelement, das zuvor auf der Außenwand der oberen Innenverkleidung (315a) abgelegt wurde;
- Ablegen eines Lötelements auf der Wabenstruktur (325) oder auf der Innenwand der oberen Außenverkleidung;
- Ablegen der oberen Außenverkleidung (313a) auf dem Lötelement der Wabenstruktur (325);
- Positionieren einer oberen Gegenform (321 a) auf der oberen Außenverkleidung (313a).

## Claims

1. A method for manufacturing a metal part, remarkable in that it comprises the following steps aiming at:
- manufacturing a tooling assembly comprising:
o at least one counter-form (101, 321a, 321b) with a shape substantially similar to that of said part to be manufactured, and
o at least one tight core (103, 203, 327) at least partially deformable and comprising:
▪ at least one inner skin (109, 315a, 315b) and at least one outer skin (105, 205, 313a, 313b), said inner and outer skins constituting respectively an inner skin and an outer skin of the part to be manufactured,
▪ at least one honeycomb structure (107, 207, 323, 325) positioned between said inner and outer skins,
▪ at least one brazing member, inserted between the honeycomb structure (107, 207, 323, 325) and said inner (109, 315a, 315b) and outer (105, 205, 313a, 313b) skins ,
said core being closed at its ends by at least one tight lid (111, 113, 317, 319) comprising means for introducing a gas inside said core, at least one of said lids being fastened to said inner skin by welding;
- positioning said tooling assembly in a vacuum furnace;
- introducing a pressurized gas directly within the inner skin of the core of the tooling assembly;
- heating the tooling assembly so as to cause successively:
o the plating of the core against the counter-form (101, 321 a, 321 b) by expansion of said pressurized gas;
o the brazing of the honeycomb structure (107, 207, 323, 325) and of the inner (109, 315a, 315b) and outer (105, 205, 313a, 313b) skins;
- purging said gas from the inner portion of the inner skin (109, 315a, 315b);
- dismounting the tooling assembly so as to extract the manufactured part.

2. The manufacturing method according to claim 1, **characterized in that** the part to be manufactured is a front portion of the ejection cone of hot gases discharged by an aircraft turbojet engine whose inner (109) and outer (105, 205) skins are preferably made of Inconel 625.

3. The manufacturing method according to claim 2, **characterized in that** the inner skin is cold-formed by hydroforming.

4. The manufacturing method according to claim 2, **characterized in that** the inner skin (109) has a substantially cylindrical shape.

5. The manufacturing method according to any one of claims 2 to 4, **characterized in that** the outer skin (105) is preformed.

6. The manufacturing method according to any of claims 2 to 4, **characterized in that** the outer skin (205) has a substantially cylindrical shape.

7. The manufacturing method according to any one of claims 1 to 6, **characterized in that** the outer skin (105, 205) is an acoustic skin.

8. The manufacturing method according to claim 1, **characterized in that** the part to be manufactured is an inner fixed structure of turbojet engine nacelle whose inner (315a, 315b) and outer (313a, 313b) skins are preferably made of titanium.

9. The manufacturing method according to claim 8, **characterized in that** the tooling assembly is made by a manufacturing method comprising the following steps aiming at:
- manufacturing a first substantially barrel-shaped shroud defining at least partially the inner skin of the inner fixed structure;
- manufacturing a second substantially barrel-shaped shroud defining at least partially the outer skin of the inner fixed structure;
- manufacturing by hot forming blocks defining at least partially the inner and outer skins of the inner fixed structure;
- piercing the shrouds and the blocks of said outer skin;
- cutting each shroud in the longitudinal direction so as to define:
o a half-shroud defining at least partially an upper outer skin (313a);
o a half-shroud defining at least partially a lower outer skin (313b);
o a half-shroud defining at least partially an upper inner skin (315a);
o a half-shroud defining at least partially a lower inner skin (315b);
- welding the blocks at the ends of each half-shroud so as to define:
o an upper outer skin (313a);
o a lower outer skin (313b);
o an upper inner skin (315a);
o a lower inner skin (315b);
- assembling, for example, by welding together, the blocks of the upper inner skin (315a) with the blocks of the lower inner skin (315b) so as to define the inner skin of the inner fixed structure;
- depositing a brazing member on an outer wall of the lower (315b) and upper (315a) inner skins;
- positioning the lower outer skin (313b) in a lower counter-form (321 b);
- depositing a brazing member on an inner wall of said lower outer skin (313b);
- depositing a preformed honeycomb structure (323) on said brazing member of the inner wall of the lower outer skin (313b);
- depositing the lower (315b) and upper (315a) inner skins on said honeycomb structure (323);
- depositing a preformed honeycomb structure (325) on the brazing member previously deposited on the outer wall of the upper inner skin (315a);
- depositing a brazing member on said honeycomb structure (325) or on the inner wall of said upper outer skin;
- depositing the upper outer skin (313a) on the brazing member of said honeycomb structure (325);
- positioning an upper counter-form (321 a) on the upper outer skin (313a).
